# EUROPÄISCHE PATENTSCHRIFT

(11) **EP 0 546 985 B1**
(45) Veröffentlichungstag und Bekanntmachung des Hinweises auf die Patenterteilung: **31.03.1999**
(21) Anmeldenummer: 92810483.5
(22) Anmeldetag: 25.06.1992
(51) Int. Cl.: F02M 43/04, F02M 21/02

(54) **Brennstoffeinspritzventil für eine Hubkolbenbrennkraftmaschine für wahlweisen Betrieb mit Dieselöl oder mit einem gasförmigen Brennstoff**
Fuel injection valve for a reciprocating internal combustion engine optionally operating on diesel oil or on a gaseous fuel
Soupape d'injection de combustible pour un moteur à combustion interne à piston fonctionnant au carburant diesel ou avec un combustible gazeux, au choix

(30) Priorität: 10.12.1991 CH 3631/91
(43) Veröffentlichungstag der Anmeldung: 16.06.1993
(73) Patentinhaber: New Sulzer Diesel France SA, F-78202 Mantes-La-Jolie Cedex (FR)
(72) Erfinder: Scherrer, Hans, CH-8450 Andelfingen (CH); Yildirim, Turhan, CH-8408 Winterthur (CH)
(74) Vertreter: Hammer, Bruno, Dr.

(56) Entgegenhaltungen:
- EP-A- 0 371 759
- DK-B- 155 757
- JP-A- 6 355 352
- US-A- 4 742 801
- US-A- 4 856 713
- PATENT ABSTRACTS OF JAPAN vol. 11, no. 57 (M-564)21. Februar 1987 & JP-A-61 218 764 (MITSUI ENG & SHIPBUILD CO LTD) 29 September 1986
- PATENT ABSTRACTS OF JAPAN vol. 11, no. 57 (M-564)21. Februar 1987 &JP-A-61 218 766 (MITSUI ENG & SHIPBUILD CO LTD) 29 September 1986
- PATENT ABSTRACTS OF JAPAN vol. 11, no. 339 (M-639)6. November 1987 & JP-A-62 121 854 (MITSUI ENG & SHIPBUILD CO LTD) 3 JUNI 1987

## Beschreibung

Die Erfindung betrifft ein Brennstoffeinspritzventil für eine Hubkolbenbrennkraftmaschine gemäss dem Oberbegriff des Anspruches 1 und eine Anordnung mit Brennstoffeinspritzventil.

Ein derartiges Einspritzventil ist aus der JP-A-61218764 bekannt. Dieses Ventil enthält ein mehrteiliges Gehäuse, das ein Innengehäuse zum Zuführen eines ersten Brennstoffes mit einer ersten Ventilnadel und ein Aussengehäuse zum Zuführen eines zweiten Brennstoffes mit einer zweiten Ventilnadel aufweist. Das Innengehäuse und das Aussengehäuse sind jeweils zweiteilig ausgebildet und ineinandergreifend so angeordnet, dass ein Raum zum Zuführen des zweiten Brennstoffes vorhanden ist.

Zwischen den Ventilnadeln ist ein Ventilkörper vorgesehen und im Aussenkörper ist ein Einsatz mit einer ersten und zweiten Reihe von Düsenlöchern vorgesehen.

Dieses Einspritzventil hat die Nachteile, dass beim Dieselbetrieb Oel in den Ringraum eindringen kann und dass bei Dieselbetrieb über einen längeren Zeitraum das Oel verkokt, so dass das Einspritzventil vor dem Gasbetrieb gereinigt werden muss.

Der Erfindung liegt daher die Aufgabe zugrunde, ein Brennstoffeinspritzventil für eine Hubkolbenbrennkraftmaschine zu schaffen, welches die genannten Nachteile nicht aufweist und welches deshalb betriebssicher arbeitet.

Das Ventil hat den Vorteil, dass die Ringkammer in einen Spülölkreislauf integriert ist, wobei dieser Kreislauf verhindert, dass sich Sperröl im Ringraum ansammelt und das Einspritzventil zusätzlich kühlt.

Dank den zwei Reihen von Düsenlöchern mit je einer zugeordneten Ventilnadel ist es möglich, die Zufuhr der beiden Brennstoffe unabhängig voneinander in ein und demselben Einspritzventil durchzuführen. Dies hat gegenüber der bekannten Anordnung eine konstruktive Vereinfachung zur Folge, da der Zylinderkopf nur mit einem Durchbruch für die Zufuhr der beiden Brennstoffe versehen werden muss. Vorteilhaft ist auch, dass das Schliessen der zweiten Ventilnadel durch den Sperröldruck erfolgt, da das Sperröl noch anderweitig für Dichtzwecke innerhalb des Einspritzventils verwendet werden kann. Das Aufbringen der Schliesskraft für die zweite Ventilnadel durch das Sperröl wirkt ausserdem konstruktiv vereinfachend, weil dann im Einspritzventil kein zusätzlicher Raum zum Unterbringen einer weiteren Schliessfeder vorgesehen werden muss.

Ein Ausführungsbeispiel der Erfindung ist in der folgenden Beschreibung anhand der Zeichnung näher erläutert. Es zeigen:
- Fig.1: in schematischer Darstellung die Anordnung des Brennstoffeinspritzventils nach der Erfindung im Zylinder einer Hubkolbenbrennkraftmaschine,
- Fig.2a: den Oberteil des Brennstoffeinspritzventils, teilweise in einem Axialschnitt in der Ebene I-I in Fig.4,
- Fig.2b: den Unterteil des Einspritzventils von Fig.2a, axial in der selben Ebene geschnitten wie in Fig.2a, jedoch in grösserem Massstab als in Fig.2a dargestellt,
- Fig.3a: den Oberteil des Einspritzventils nach Fig.2a, teilweise in einem Axialschnitt in der Ebene II-II in Fig.4,
- Fig.3b: den Unterteil im Axialschnitt entsprechend der Linie II-II, wiederum in grösserem Massstab als in Fig.3a dargestellt,
- Fig.4: eine Draufsicht auf den Unterteil des Brennstoffeinspritzventils und
- Fig.5: schematisch einen Teil eines Spülölkreislaufes mit Schaltventil.

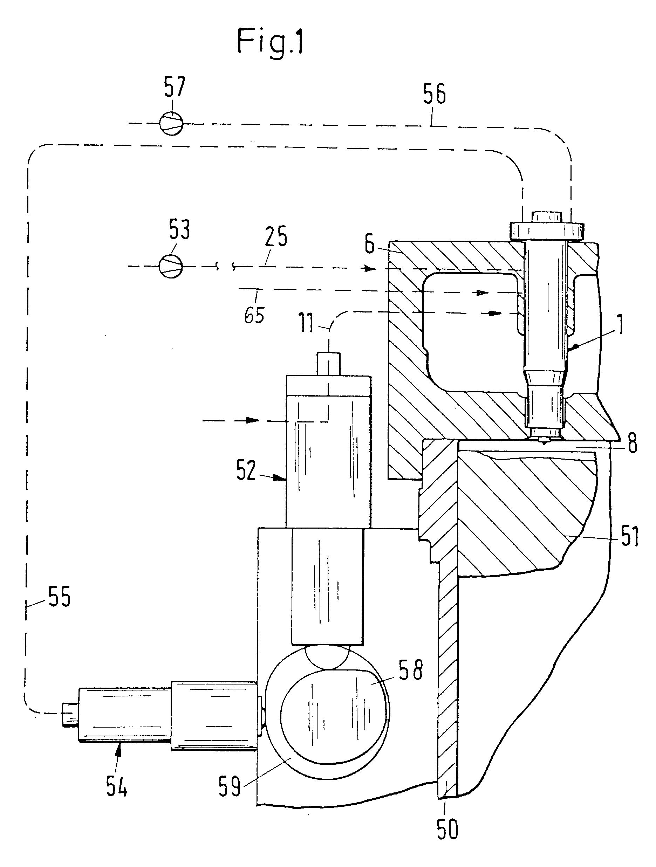

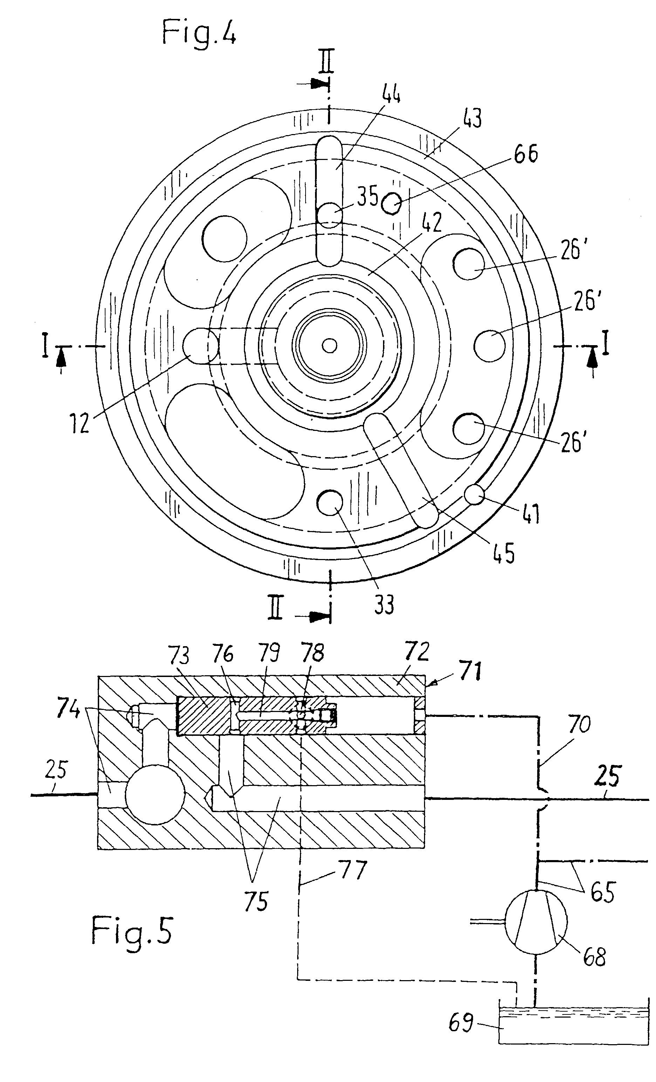

Gemäss Fig.1 ist ein Brennstoffeinspritzventil 1 für Dieselöl und für gasförmigen Brennstoff in einem Zylinderkopf 6 angeordnet, der auf einen Zylinder 50 einer nach dem Viertakt-Dieselverfahren arbeitenden Hubkolbenbrennkraftmaschine aufgesetzt ist. Im Zylinder 50 ist ein Arbeitskolben 51 in nicht näher dargestellter Weise auf- und abbeweglich geführt, der zwischen seiner in Fig.1 oberen Kolbenseite und dem Zylinderkopf 6 einen Brennraum 8 begrenzt. Dem Brennstoffeinspritzventil 1 wird über eine Leitung 11 Dieselöl zugeführt, das in bekannter Weise mit Hilfe einer nockengesteuerten Einspritzpumpe 52 auf einen Einspritzdruck von beispielsweise 1200 bar gebracht wird. Dieser Druck gilt für Vollast der Brennkraftmaschine und Betrieb mit Dieselöl als Hauptbrennstoff. Ausser dem Dieselöl kann dem Einspritzventil 1 auch gasförmiger Brennstoff zugeführt werden, und zwar über eine Leitung 25, die an einen Kompressor 53 angeschlossen ist, der das Gas beispielsweise auf einen Druck von 250 bar bringt. Das Brennstoffeinspritzventil 1 weist zwei, in Fig.1 nicht näher dargestellte Ventilnadeln auf, mit deren Hilfe die Zufuhr des jeweils verwendeten Brennstoffs zum Brennraum 8 gesteuert wird. Zum Betätigen der die Zufuhr des gasförmigen Brennstoffs steuernden Ventilnadel ist eine nockengesteuerte Hubgeberpumpe 54 vorgesehen, die über eine Leitung 55 dem Einspritzventil 1 hydraulisches Druckmittel zuführt, das die betreffende Ventilnadel in öffnendem Sinnne betätigt. Zum Schliessen dieser Ventilnadel wird dem Einspritzventil 1 Sperröl über eine Leitung 56 zugeführt, die an eine Sperrölpumpe 57 angeschlossen ist. Für die Einspritzpumpe 52 und die Hubgeberpumpe 54 ist je ein Nocken 58 bzw. 59 vorgesehen, die gemeinsam auf einer nicht näher gezeichneten Welle sitzen, die in Abhängigkeit von der nicht dargestellten Kurbelwelle der Hubkolbenbrennkraftmaschine angetrieben ist. Am Einspritzventil 1 ist zwischen den Leitungen 11 und 25 eine Leitung 65 angeschlossen, die Teil eines Spülölkreislaufes ist, der weiter unten im Zusammenhang mit Fig.5 beschrieben wird.

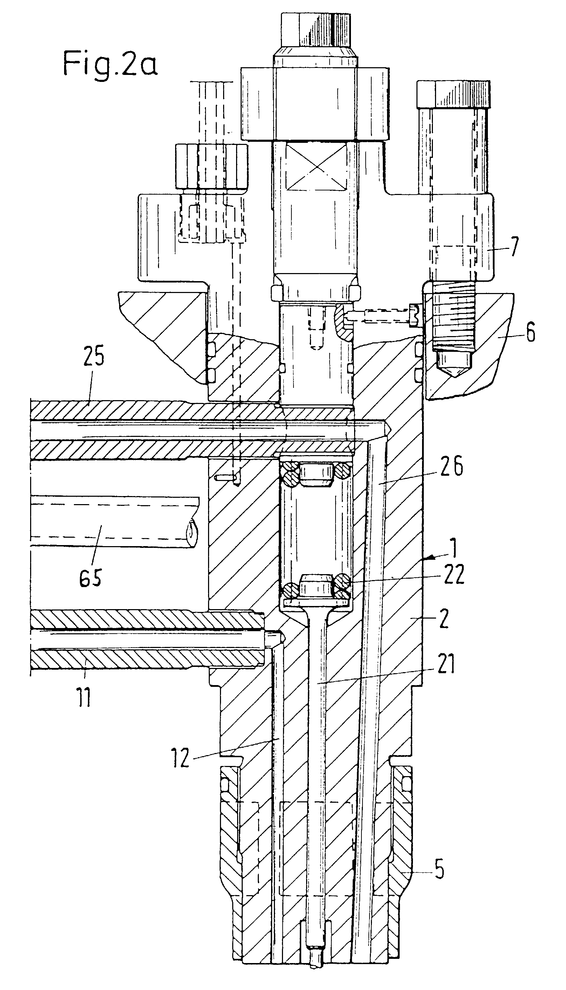

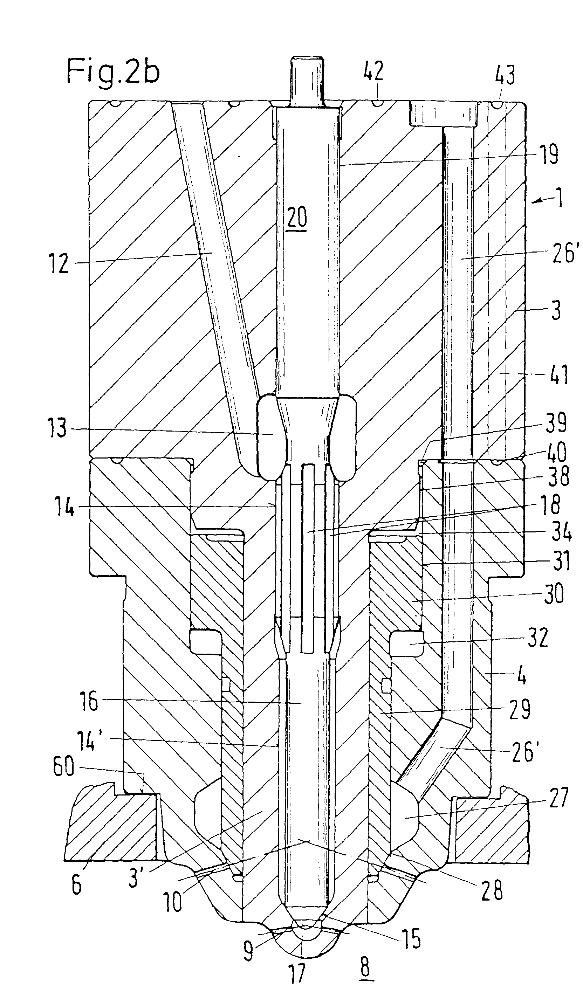

Gemäss Fig.2a und 2b weist das Einspritzventil 1 einen Ventilkörper auf, der aus einem oberen Teil 2, einem mittleren Teil 3 und einem unteren Teil 4 besteht, wobei die drei Teile durch eine Ueberwurfmutter 5 zusammengehalten werden, von der in Fig.2a nur das obere Ende gezeigt ist. Der Ventilkörper ruht mit einer nahe dem unteren Ende des Teils 4 vorgesehenen Schulter 60 in dem hier nicht näher dargestellten Zylinderkopf 6. Der Ventilkörper durchdringt den Zylinderkopf und ragt mit dem unteren Ende seiner Teile 3 und 4 in den Brennraum 8. In dem unteren Ende des mittleren Teils 3 befindet sich eine Reihe von Düsenlöchern 9, deren Mittelachsen auf einem Kegelmantel liegen. Die Reihe von Düsenlöchern 9 dient dem Einspritzen von Dieselöl. In Fig.2b etwas oberhalb der Düsenlöcher 9 befindet sich eine zweite Reihe von Düsenlöchern 10 im unteren Ende des unteren Teils 4. Auch die Mittelachsen der Düsenlöcher 10 liegen auf einem Kegelmantel, wobei der Kegelwinkel des Kegelmantels der Düsenlöcher 10 etwas kleiner ist als der Kegelwinkel des Kegelmantels der Düsenlöcher 9. Die Düsenlöcher 10 sind zum Einspritzen eines gasförmigen Brennstoffs, z.B. Erdgas, in den Brennraum 8 bestimmt. Die Reihe der Düsenlöcher 9 und die Reihe der Düsenlöcher 10 sind brennstoffseitig voneinander durch eine zylindrische Wand 3' des mittleren Teils 3 getrennt.

Gemäss Fig.2a ist am oberen Teil 2 des Ventilkörpers die Leitung 11 für die Zufuhr von Dieselöl dicht angeschlossen. Die Leitung 11 setzt sich als Kanal 12 fort, der den oberen Teil 2 und den mittleren Teil 3 durchdringt und in eine Kammer 13 mündet. Von der Kammer 13 geht eine Bohrung 14 aus, die sich gegen das untere Ende des mittleren Teils 3 erstreckt und dort in einen kegeligen Ventilsitz 15 für eine erste Ventilnadel 16 übergeht. Unterhalb des Ventilsitzes 15 weist der mittlere Teil 3 einen Raum 17 auf, von dem die Düsenlöcher 9 ausgehen. Der obere Abschnitt der Bohrung 14, der in seinem Durchmesser etwas grösser ist als der untere Abschnitt 14', dient als Führung für die Ventilnadel 16, die in diesem Führungsbereich mit axialen Nuten 18 versehen ist, die den Durchfluss von Dieselöl von der Kammer 13 zum Raum 17 ermöglichen, wenn die Nadel 16 vom Ventilsitz 15 abgehoben hat. Von der Kammer 13 ausgehend erstreckt sich eine Bohrung 19 in Fig.2b nach oben, die koaxial zur Bohrung 14 verläuft und gleichen Durchmesser wie diese aufweist. Der Durchmesser der Bohrung 19 kann auch grösser sein. In der Bohrung 19 ist ein Abschnitt 20 der Ventilnadel 16 geführt. Das in Fig.2b obere Ende der Ventilnadel 16 steht in kraftschlüssiger Verbindung mit einer Stange 21, die an ihrem in Fig.2a oberen Ende einen Federteller aufweist, auf dem sich eine Schraubenfeder 22 abstützt, die den Schliessdruck auf die Ventilnadel 16 ausübt.

Ausser der Dieselölzufuhrleitung 11 ist am oberen Teil 2 des Ventilkörpers die Leitung 25 für die Zufuhr des gasförmigen Brennstoffs angeschlossen. Die Leitung 25 setzt sich in einen Kanal 26 fort, der den oberen Teil 2 durchdringt. Im mittleren Teil 3 teilt sich der Kanal 26 in drei Kanäle 26' auf (Fig.4), die diesen Teil und den unteren Teil 4 durchdringen und dann in eine Ringkammer 27 münden. Die Ringkammer 27 geht an ihrem in Fig.2b unteren Ende in einen Ventilsitz 28 über, der mit einer zweiten, als Hohlnadel ausgebildeten Ventilnadel 29 zusammenwirkt. Von dem Ventilsitz 28 gehen die Düsenlöcher 10 aus. Die Hohlnadel 29 gleitet mit ihrer zylindrischen Innenfläche auf der Wand 3' des mittleren Teils 3. Das in Fig.2b obere Ende der Hohlnadel 29 ist verdickt und bildet einen Kolben 30, der in einer zylindrischen Bohrung 31 des unteren Teils 4 gleitet.

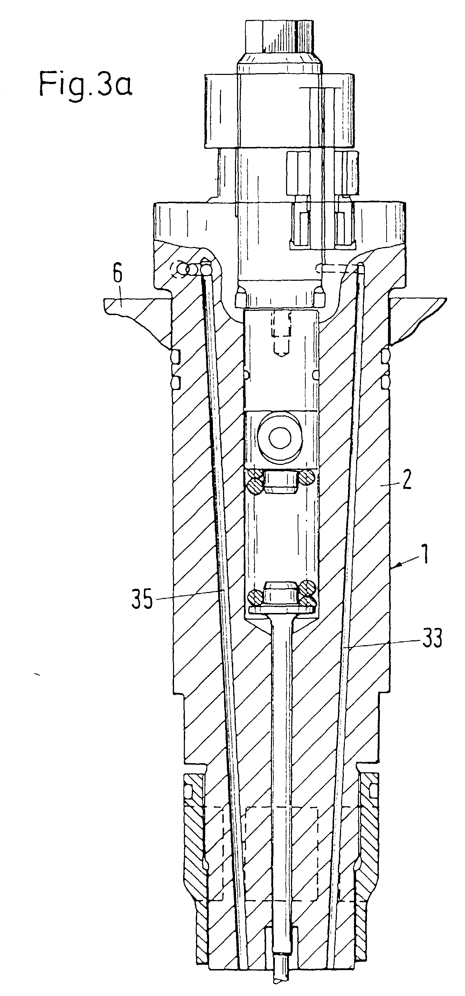

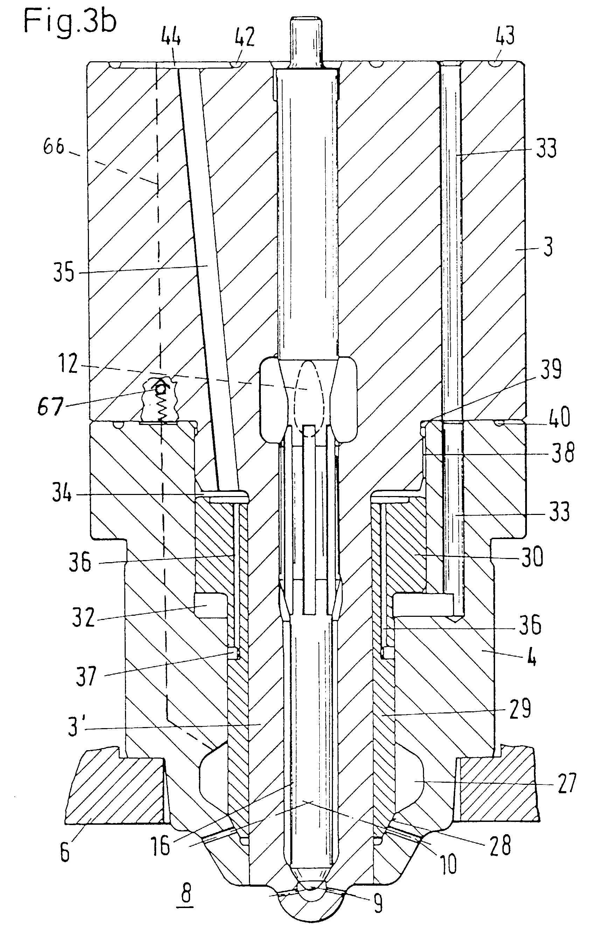

Auf der in Fig.2b unteren Seite des Kolbens 30 ist ein Zylinderraum 32 vorgesehen, der gemäss Fig.3b mit einem Kanal 33 in Verbindung steht, der sich durch den unteren Teil 4, den mittleren Teil 3 und den oberen Teil 2 des Ventilkörpers erstreckt und über den das hydraulische Druckmittel in der Leitung 55 (Fig.1) unter einem Druck von etwa 600 bar zugeführt wird. Dieses Druckmittel, das von der in Fig.1 dargestellten Hubgeberpumpe 54 gefördert wird, wirkt im Oeffnungssinn auf die Hohlnadel 29. Auf der in Fig.2b und 3b oberen Seite des Kolbens 30 ist ein Zylinderraum 34 vorgesehen, der gemäss Fig.3b mit einem Kanal 35 in Verbindung steht, der sich durch den mittleren Teil 3 und den oberen Teil 2 des Ventilkörpers erstreckt und der das Sperröl in der Leitung 56 (Fig.1) unter einem ständigen Druck von etwa 300 bar zuführt. Der im Zylinderraum 34 wirkende Sperröldruck erzeugt also die Schliesskraft für die Hohlnadel 29.

Vom Zylinderraum 34 ausgehend, erstrecken sich mehrere Kanäle 36 (Fig.3b) durch den Kolben 30 und den daran sich nach unten anschliessenden Abschnitt der Hohlnadel 29 bis zu einer Ringnut 37, die zur äusseren Begrenzungsfläche der Hohlnadel 29 hin offen ist. Durch diese Sperrölzufuhr wird vermieden, dass Gas aus der Ringkammer 27 zum Zylinderraum 32 gelangen kann, der nur während ca. 30° von 720° Kurbelwinkel unter dem Druck des hydraulischen Druckmittels steht. Das Sperröl, das stoffmässig mit dem hydraulischen Druckmittel identisch ist, dichtet auch den Spalt zwischen der Hohlnadel 29 und der Wand 3' gegen ein Eindringen von Gas bei Gasbetrieb der Hubkolbenbrennkraftmaschine.

Ausserdem gelangt Sperröl vom Zylinderraum 34 aus über mehrere axiale Nuten 38 zu einer Ringnut 39, die auf der Höhe der horizontalen Trennfläche zwischen dem mittleren Teil 3 und dem unteren Teil 4 liegt. In dieser Trennfläche befindet sich ausserhalb des Kanals 33 eine Ringnut 40, die, wie Fig.2b erkennen lässt, über einen axial sich durch den mittleren Teil 3 erstreckenden Kanal 41 ebenfalls mit Sperröl versorgt wird. Die Ringnut 40 umschliesst auch die den gasförmigen Brennstoff zuführenden Kanäle 26'. Zwischen den Ringnuten 39 und 40 bestehen nicht dargestellte radiale sperrölgefüllte Verbindungsnuten, die die gasführenden Kanäle 26' vom Kanal 33 trennen. Im Bereich der Kanäle 26' und 33 besteht jeweils eine metallische Dichtung, die vom Sperröl in den Ringnuten 39 und 40 sowie den radialen Nuten umgeben ist.

Eine gleiche metallische Dichtung besteht zwischen dem mittleren Teil 3 und dem oberen Teil 2 im Bereich der Kanäle 12, 26', 26 und 33, die von zwei konzentrischen Ringnuten 42 und 43 umgeben sind. Wie Fig.4 zeigt, sind die beiden Ringnuten 42 und 43 durch zwei radiale Nuten 44 und 45 miteinander verbunden, wobei in die Nut 44 der Kanal 35 des Teils 2 mündet. Somit herrscht auch in den Nuten 42 bis 45 der Sperröldruck.

Die oben schon erwähnte Spülölleitung 65, deren Anschluss am oberen Teil 2 des Ventilkörpers nicht detailliert dargestellt ist, setzt sich in einem Kanal 66 fort, der in Fig.3b gestrichelt dargestellt ist und in den Ringraum 27 mündet. Nahe der Trennstelle zwischen dem mittleren Teil 3 und dem unteren Teil 4 des Ventilkörpers ist im Teil 3 der Kanal 66 mit einem Rückschlagventil 67 versehen, das gegen die Strömungsrichtung des zum Ringraum 27 strömenden Spülöls schliesst. Wie aus Fig.4 zu erkennen ist, befindet sich der Kanal 66 - in Umfangsrichtung des Ventilkörpers gesehen - zwischen den Kanälen 26' für das Gas einerseits und dem Kanal 35 für das Sperröl andererseits.

Wie Fig.5 zeigt, geht die Leitung 65 von der Förderseite einer Spülölpumpe 68 aus, die das Spülöl, das zweckmässig wie das Sperröl Schmieröl ist, aus einem Tank 69 ansaugt. Von der Leitung 65 zweigt eine Leitung 70 ab, die das Einspritzventil umgeht und zu einem Schaltventil 71 führt. Im Gehäuse 72 des Schaltventils 71 ist ein bewegliches Ventilglied 73 angeordnet, das mit seinem in Fig.5 rechten Ende dem Druck des Spülöls in der Leitung 70 ausgesetzt ist. Das in Fig.5 linke Ende des Ventilgliedes 73 sperrt in der gezeichneten Stellung einen Kanal 74 ab, der mit der vom Kompressor 53 (Fig.1) kommenden Leitung 25 für den gasförmigen Brennstoff in Verbindung steht. Ausser dem Kanal 74 ist im Ventilgehäuse 72 ein Kanal 75 vorgesehen, der die Verbindung zur Leitung 25 herstellt, die in das Einspritzventil 1 mündet. Im Bereich der Abzweigung des Kanals 75 vom Ventilglied 73 weist dieses eine Querbohrung 76 auf. Am Ventilgehäuse 72 ist eine Rücklaufleitung 77 für das Spülöl angeschlossen, die in den Tank 69 mündet. Im Bereich der Anschlussstelle der Rückführleitung 77 befindet sich im Ventilglied 73 eine Querbohrung 78, die über eine Axialbohrung 79 mit der Querbohrung 76 in Verbindung steht.

Das beschriebene Einspritzventil funktioniert wie folgt. Bei Betrieb der Hubkolbenbrennkraftmaschine mit Dieselöl als Hauptbrennstoff wird von der Einspritzpumpe 52 über die Leitung 11 Dieselöl mit einem Druck von etwa 1200 bar zugeführt, der über den Kanal 12 in die Kammer 13 sowie den Ringraum zwischen der ersten Ventilnadel 16 und der umgebenden Wand 3' gelangt. Unter der Wirkung des Brennstoffdruckes wird in an sich bekannter Weise die Ventilnadel 16 unter Ueberwindung der Kraft der Feder 22 vom Ventilsitz 15 abgehoben und das Dieselöl über die untere Reihe von Düsenlöchern 9 in den Brennraum 8 eingespritzt. Sowie der von der Einspritzpumpe 52 erzeugte Brennstoffdruck sinkt, wird die Ventilnadel 16 von der Feder 22 auf den Ventilsitz 15 zurückgeführt, womit der Einspritzvorgang beendet ist.

Während dieses Dieselölbetriebes kann Sperröl von der Ringnut 37 zwischen der Aussenfläche der Hohlnadel 29 und der umgebenden Zylinderfläche des unteren Teils 4 in den Ringraum 27 gelangen. Dieses Sperröl sammelt sich im Ringraum 27 und kann wegen der dort herrschenden hohen Temperatur verkoken, was gegebenenfalls zu einer Funktionsstörung führen könnte, wenn das Einspritzventil auf Gasbetrieb umgeschaltet werden soll. Um eine solche Funktionsstörung zu vermeiden, ist der Spülölkreislauf vorgesehen. Während des Dieselölbetriebes hat das Ventilglied 73 im Schaltventil 71 die in Fig.5 gezeichnete Stellung und die Pumpe 68 fördert Spülöl mit einem Druck von 6 bar über die Leitung 65 und den Kanal 66 in den Ringraum 27. Von dort strömt dann das Spülöl über die Kanäle 26' und den Kanal 26 in die Leitung 25, wobei in den Ringraum gelangtes Sperröl mitgenommen wird. Das Spülöl strömt dann in das Schaltventil 71, und zwar über den Kanal 75 sowie die Bohrungen 76, 79 und 78 zur Rücklaufleitung 77, so dass es schliesslich in den Tank 69 zurückströmt. Durch diesen Kreislauf wird also einerseits vermieden, dass sich Sperröl im Ringraum 27 sammelt und dort verkokt und andererseits wird das Einspritzventil durch das Spülöl zusätzlich gekühlt.

Bei Betrieb mit gasförmigem Brennstoff, der vom Kompressor 53 mit einem Druck von 250 bar angeliefert wird, wird das Ventilglied 73 durch den Gasdruck in Fig.5 nach rechts verschoben, und zwar so weit, bis die Querbohrung 76 sich auf der Höhe der Anschlussstelle der Rücklaufleitung 77 befindet. In dieser Stellung gibt das in Fig.5 linke Ende des Ventilgliedes 73 den Durchfluss von Gas vom Kanal 74 zum Kanal 75 frei, so dass der gasförmige Brennstoff zum Einspritzventil 1 weiterströmt. Das Gas steht nunmehr in den Kanälen 26 und 26' sowie der Ringkammer 27 unter dem Druck von 250 bar an und wird in dem Moment über die obere Reihe von Düsenlöchern 10 in den Brennraum 8 eingespritzt, in dem das über den Kanal 33 zugeführte hydraulische Druckmittel den Kolben 30 nach oben bewegt. Diese Bewegung findet statt, wenn das von der Hubgeberpumpe 54 kommende Druckmittel, das unter einem Druck von 600 bar steht, im Zylinderraum 32 eine Kraft entwickelt, die grösser ist als die Kraft, die vom Sperröldruck im Zylinderraum 34 herrührt und auf die Oberseite des Kolbens 30 wirkt. Sowie der von der Hubgeberpumpe 54 erzeugte Druck zurückgeht, überwiegt wieder der Sperröldruck im Raum 34, so dass die zweite Ventilnadel 29 auf den Ventilsitz 28 zurückgeht und die weitere Gaszufuhr sperrt. Das Einspritzen von Gas geschieht etwa während 30° Kurbelwinkel. Im Bereich des Einspritzbeginns des gasförmigen Brennstoffs findet auch eine kurzzeitige Einspritzung einer kleinen Menge Dieselöl statt, die zum Zünden des gasförmigen Brennstoffs dient. Dieses Zündöl, dessen Menge etwa 5% der Dieselölmenge bei reinem Dieselölbetrieb bei Vollast beträgt, wird über die untere Reihe von Düsenlöchern 9 in den Brennraum 8 eingespritzt. Das Steuern dieser Zündeöleinspritzung geschieht ebenfalls mit der bei reinem Dieselbetrieb wirkenden Einspritzpumpe.

Während dieses Gasbetriebes ist die Spülölpumpe 68 abgeschaltet. Um zu vermeiden, dass Gas über den Spülölkanal 66 zur Leitung 65 gelangt, ist das Rückschlagventil 67 (Fig.3b) vorgesehen, das durch das im Ringraum 27 anstehende Gas geschlossen gehalten wird. Das Ventilglied 73 geht in die in Fig.5 gezeichnete Stellung zurück, wenn der Betrieb der Brennkraftmaschine mit gasförmigem Brennstoff beendet ist und wieder zum Dieselölbetrieb übergegangen wird.

## Patentansprüche

1. Brennstoffeinspritzventil (1) für eine Hubkolbenbrennkraftmaschine, die wahlweise mit Dieselöl oder mit einem gasförmigen Brennstoff betreibbar ist, mit einem Ventilkörper (2, 3, 4), der mindestens zwei Reihen von über seinen Umfang verteilten Düsenlöchern (9, 10) aufweist, wobei die beiden Reihen brennstoffseitig voneinander durch eine Wand (3') im Ventilkörper getrennt sind und jeder Reihe von Düsenlöchern (9, 10) eine mit einem Ventilsitz (15, 18) zusammenwirkende Ventilnadel (16, 29) zugeordnet ist, von denen eine erste (16) im Zentrum des Ventilkörpers angeordnet und die zweite als Hohlnadel (29) ausgebildet und ausserhalb der Wand (3') im Ventilkörper angeordnet ist, wobei die erste, zum Einspritzen von Dieselöl bestimmte Ventilnadel (16) im Takt des von einer Einspritzpumpe (52) erzeugten Druckes des Dieselöls unter Abheben von ihrem Ventilsitz (15) öffnet und durch eine Feder (22) in Schliessstellung gebracht wird und wobei die zweite, zum Einspritzen von gasförmigem Brennstoff bestimmte Ventilnadel (29) mit einem Kolben (30) versehen ist, dessen eine Seite zum taktweisen Oeffnen dieser Ventilnadel vom Druck eines von einer Hubgeberpumpe (54) gesteuerten hydraulischen Druckmittels beaufschlagt ist und das Schliessen der zweiten Ventilnadel (29) durch ein unter Druck stehendes, die andere Kolbenseite beaufschlagendes Sperröl geschieht, wobei sich im Ventilkörper (2, 3, 4) nahe dem Ventilsitz (28) für die zweite Ventilnadel (29) ein Ringraum (27) und, von diesem ausgehend, mindestens ein Zufuhrkanal (26', 26) für den gasförmigen Brennstoff befinden, an dem eine Gaszufuhrleitung (25) angeschlossen ist, dadurch gekennzeichnet, dass die Gaszufuhrleitung (25) und der Zufuhrkanal (26', 26) mit dem Ringraum (27) in einen Spülölkreislauf integriert sind, der ein Schaltventil (71) in der Gaszufuhrleitung (25) aufweist, das bei Dieselölbetrieb die Zufuhr von gasförmigem Brennstoff sperrt und Spülöl durch den Ringraum (27) und den Zufuhrkanal (26', 26) strömen lässt und bei Gasbetrieb die Zufuhr von gasförmigem Brennstoff zum Ringraum (27) freigibt.

2. Einspritzventil nach Anspruch 1, dadurch gekennzeichnet, dass die bei Dieselölbetrieb zum Einspritzen von Dieselöl bestimmten Düsenlöcher (9) auch zum Einspritzen von Dieselzündöl bei Gasbetrieb dienen.

3. Einspritzventil nach Anspruch 1 oder 2, dadurch gekennzeichnet, dass die zweite Ventilnadel (29) ausgehend von der durch das Sperröl beaufschlagten Kolbenseite mindestens einen Kanal (36) aufweist, der sich in Richtung zum zugehörigen Ventilsitz (28) bis unterhalb der vom hydraulischen Druckmittel beaufschlagten Kolbenseite erstreckt und in eine Ringnut (37) in der Aussenfläche der zweiten Ventilnadel (29) ausmündet, so dass in der Ringnut befindliches Sperröl ein Vordringen von Gas zur vom hydraulischen Druckmittel beaufschlagten Kolbenseite verhindert.

## Claims

1. Fuel injection valve (1) for a reciprocating piston combustion engine which can be selectively operated with diesel oil, or with a gaseous fuel as a main fuel, comprising a valve body (2, 3, 4, 5) having at least two rows of nozzle apertures (9, 10) which are distributed around its periphery, wherein the two rows are separated from one another at the fuel side by a wall (3') in the valve body, and a valve needle (16, 29) co-operating with a valve seat (15, 18) is associated with each row of nozzle apertures (9, 10), with the first valve needle (16) being arranged at the centre of the valve body and the second being formed as a hollow needle (29) and being disposed outside of the wall (3') in the valve body, wherein the first valve needle (16) intended for the injection of diesel oil is opened in the rhythm of the pressure of the diesel oil produced by an injection pump (52) while being lifted from its valve seat (15) and is brought by a spring (22) into the closed position, and wherein the second valve needle (29) intended for the injection of the gaseous fuel is provided with a piston (30), the one side of which is pressurised for the rhythmic opening of the valve needle by the pressure of a hydraulic pressure medium controlled by a stroke giving pump (54) and the closing of the second valve needle (29) takes place by a blocking oil standing under pressure and pressurising the other side of the piston, wherein there are located in the valve body (2, 3, 4) close to the valve seat (28) for the second valve needle (29), a ring space (27) and - starting from the latter - at least one supply passage (26', 26) for the gaseous fuel, at which a gas supply line (25) is connected, characterized in that the gas supply line (25) and the supply passage (26', 26) are integrated with the ring space (27) into a flushing oil circuit, which has a switching valve (71) in the gas supply line (25) that blocks the supply of gaseous fuel during diesel oil operation and permits flushing oil to flow through the ring space (27) and the supply passage (26', 26) and frees the supply of gaseous fuel to the ring space (27) in gas operation.

2. Injection valve in accordance with claim 1, characterised in that the nozzle apertures (9), which are intended for the injection of diesel oil during diesel oil operation, are also provided for the injection of diesel trigger oil during gas operation.

3. Injection valve in accordance with claim 1 or claim 2, characterised in that the second valve needle (29) has at least one passage (36) starting from the piston side pressurised by the blocking oil and extending in the direction to the associated valve seat (28) to beneath the piston side pressurised by the hydraulic pressure medium and opening into a ring groove (37) in the outer surface of the second valve needle (29), so that blocking oil located in the ring groove prevents a penetration of gas to the piston side pressurised by the hydraulic pressure medium.

## Revendications

1. Soupape d'injection de combustible (1) pour un moteur à combustion interne à piston fonctionnant sélectivement au carburant Diesel ou avec un combustible gazeux, avec un corps de soupape (2, 3, 4) qui présente au moins deux rangées de trous de buse (9, 10) réparties sur son pourtour, où les deux rangées sont séparées, côté combustible, l'une de l'autre par une paroi (3') dans le corps de soupape et où il est associé à chaque rangée de trous de buse (9, 10) un pointeau de soupape (16, 29) coopérant avec un siège de soupape (15, 18), dont un premier (16) est disposé dans le centre du corps de soupape et le deuxième est réalisé sous forme de pointeau creux (29) et est disposé à l'extérieur de la paroi (3') dans le corps de soupape, où le premier pointeau de soupape (16) prévu pour l'injection de carburant Diesel s'ouvre à la cadence de la pression du carburant Diesel produite par une pompe d'injection (52), en décollant de son siège de soupape (15), et est amené par un ressort (22) en position de fermeture, et où le deuxième pointeau de soupape (29) prévu pour l'injection du combustible gazeux est pourvu d'un piston (30) dont un côté est sollicité pour l'ouverture cadencée de ce pointeau de soupape par la pression d'un fluide sous pression hydraulique commandé par une pompe génératrice de course (54) et où la fermeture du deuxième pointeau de soupape (29) a lieu par une huile d'arrêt sous pression, sollicitant l'autre côté du piston, où se trouvent dans le corps de soupape (2, 3, 4) à proximité du siège de soupape (28) pour le deuxième pointeau de soupape (29) une chambre annulaire (27) et, en partant de celle-ci, au moins un canal d'amenée (26', 26) pour le combustible gazeux, auquel est raccordé un conduit d'amenée de gaz (25), caractérisée en ce que le conduit d'amenée de gaz (25) et le conduit d'amenée (26', 26) avec la chambre annulaire (27) sont intégrés dans un circuit d'huile de rinçage qui présente une soupape de commutation (71) dans le conduit d'amenée de gaz (25) qui, lors d'un fonctionnement au carburant Diesel, bloque l'amenée du combustible gazeux et permet l'écoulement de l'huile de rinçage à travers la chambre annulaire (25) et le canal d'amenée (26', 26) et qui, lors du fonctionnement au gaz, libère l'amenée du combustible gazeux vers la chambre annulaire (27).

2. Soupape d'injection selon la revendication 1, caractérisée en ce que les trous de buse (9) prévus lors du fonctionnement au carburant Diesel pour l'injection de carburant Diesel servent également à l'injection de carburant inflammable Diesel lors du fonctionnement au gaz.

3. Soupape d'injection selon la revendication 1 ou 2, caractérisée en ce que le deuxième pointeau de soupape (29), en partant du côté de piston sollicité par l'huile d'arrêt, présente au moins un canal (36) qui s'étend dans la direction vers le siège de soupape associé (28) jusqu'en dessous du côté de piston sollicité par le fluide sous pression hydraulique et débouche dans une rainure annulaire (27) dans la surface extérieure du deuxième pointeau de soupape (29) de telle sorte que de l'huile d'arrêt se trouvant dans la rainure annulaire empêche une pénétration du gaz vers le côté de piston sollicité par le fluide sous pression hydraulique.
